# FASCICULE DE BREVET EUROPEEN

(11) **EP 4 049 798 B1**
(45) Date de publication et mention de la délivrance du brevet: **08.05.2024**
(21) Numéro de dépôt: 22155958.6
(22) Date de dépôt: 09.02.2022
(51) Int. Cl.: B25H 1/00, B62D 65/06

(54) **SUPPORT POLYVALENT POUR MANUTENTION DE PORTE AUTOMOBILE ET METHODE DE MANUTENTION**
VIELSEITIGER HALTER FÜR DIE HANDHABUNG VON AUTOTÜREN UND HANDHABUNGSVERFAHREN
VERSATILE SUPPORT FOR HANDLING A MOTOR VEHICLE DOOR AND HANDLING METHOD

(30) Priorité: 26.02.2021 FR 2101907
(43) Date de publication de la demande: 31.08.2022
(73) Titulaire: Stellantis Auto SAS, 78300 Poissy (FR)
(72) Inventeur: GAUVIN, Dominique, 35470 Bain de Bretagne (FR)

(56) Documents cités:
- EP-A1- 3 608 214
- FR-A1- 2 785 162
- JP-B2- 5 248 408
- US-A- 5 181 307

## Description

### Domaine technique

L'invention a trait au domaine de la manutention de pièces de carrosserie de véhicules automobile.

### Technique antérieure

La manutention de pièces de carrosserie de véhicule automobile requiert un soin particulier en ce que chaque pièce de carrosserie, une fois mise en forme, doit être manutentionnée de manière individuelle afin d'éviter toute détérioration par contact avec d'autres pièces de carrosserie. Une telle manutention requiert alors l'utilisation de supports spécifiquement conçus pour les pièces de carrosserie en question. Or dans le domaine de l'assemblage de véhicules automobiles, les pièces de carrosserie changent de forme d'un modèle de véhicule à l'autre, voire même d'une version à l'autre d'un même modèle de véhicule. Plus particulièrement, les portes de véhicules automobiles requièrent une manutention particulière en ce qu'elles sont assemblées à partir de plusieurs emboutis, à savoir essentiellement une paroi extérieure, une doublure et un cadre de vitre, pour ensuite être déplacées vers une ligne d'assemblage des portes sur la caisse du véhicule automobile. Aussi, et de manière connue, les portes sont montées une première fois sur la caisse du véhicule en vue de la cataphorèse et de la mise en peinture, pour être ensuite démontées en vue de leur habillage, et être remontées définitivement sur la caisse.

Le document de brevet publié FR 2 909 968 A1 a trait à un support de manutention de portes de véhicule automobile spécifiquement conçu pour les opérations d'habillage des portes. A cet effet, le support, ou portoir, est configuré pour recevoir deux portes avec un espace entre les deux portes qui est suffisant pour donner accès à un opérateur en vue de l'habillage des faces en vis-à-vis des deux portes. Le support comprend un cadre et des zones de contact avec la porte. Ces zones de contact comprennent des moyens de bridage longitudinal en vue d'un maintien des portes en position verticale. Ces zones de contact et de bridage nécessitent des ajustements manuels précis et par ailleurs ne semblent pas prévus pour permettre un transport sécurisé des portes.

Le document US 5 181 307 A divulgue un support selon le préambule de la revendication 1.

### Exposé de l'invention

L'invention a pour objectif de pallier au moins un des inconvénients de l'état de la technique susmentionné. Plus spécifiquement, l'invention a pour objectif de proposer un support pour manutention de porte de véhicule qui soit polyvalent et facilite d'usage.

L'invention a pour objet un support selon la revendication 1.

Selon un mode avantageux de l'invention, la zone de contact avant est formée par une face frontale d'un élément s'étendant vers l'arrière depuis le cadre.

Selon un mode avantageux de l'invention, les deux zones de contact inférieur sont distantes l'une de l'autre d'au moins 300mm.

Selon un mode avantageux de l'invention, chacune des deux zones de contact inférieur présente un profil en V.

Selon un mode avantageux de l'invention, le profil en V d'au moins une des deux zones de contact inférieur est asymétrique en présentant une première portion située du côté de la zone de contact latéral et une deuxième portion opposée à la première portion et moins haute que ladite première portion.

Selon un mode avantageux de l'invention, la zone de contact latéral est du type linéique s'étendant longitudinalement.

Selon un mode avantageux de l'invention, en position normale de travail dudit support, la zone de contact latéral forme avec les deux zones de contact inférieur un plan d'appui incliné d'au moins 15° par rapport à un plan vertical passant par lesdites deux zones de contact inférieur.

Selon un mode avantageux de l'invention, le support comprend, en outre, un socle rigidement fixé au cadre et présentant une surface inférieure d'appui plane.

L'invention a également pour objet un procédé de manutention d'au moins une porte de véhicule automobile comprenant les étapes suivantes : (a) chargement de l'au moins une porte sur un support ; (b) déplacement du support ; (c) déchargement de l'au moins une porte du support ; remarquable en ce que le support est selon l'invention, à l'étape (b) l'au moins une porte étant maintenue en position en appui sur les zones de contact par l'effet de la pesanteur uniquement.

Les mesures de l'invention sont intéressantes en ce qu'elles tirent profit de zones essentiellement invariantes de portes de véhicule automobile, à savoir des zones dont la forme change très peu, voire pas du tout, d'un modèle de porte à l'autre. Le support de manutention est ainsi compatible avec un grand nombre de modèles de porte. Aussi, le fait d'exploiter la gravité pour le maintien de la porte sur le support est avantageux en ce que cela évite de devoir manipuler des éléments de retenue, comme par exemple du type à verrouillage et/ou serrage.

### Brève description des dessins

[Fig 1] est une vue en perspective d'un support pour manutention de porte de véhicule, conforme à l'invention ;
[Fig 2] est une vue en perspective de deux supports selon la figure 1 montés sur un socle commun et supportant deux portes différentes ;
[Fig 3] est une vue de profil d'un support similaire à celui des figures 1 et 2, pourvu d'un socle différent.

### Description détaillée

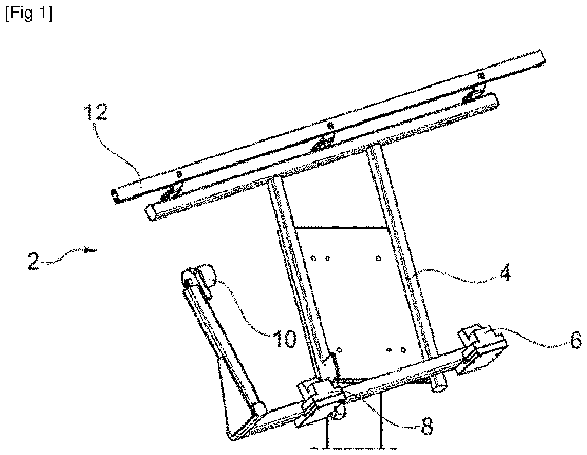

La figure 1 est une vue en perspective d'un support pour la manutention de porte de véhicule, conforme à l'invention.

Le support 2 comprend un cadre 4 et des zones de contact avec la porte 4, 6, 8, 10 et 12 toutes fixées au cadre 4. Le cadre est avantageusement du type tubulaire, c'est-à-dire formé de tubes et/ou profilés métalliques assemblés les aux autres notamment par soudure. Les zones de contact 4, 6, 8, 10 et 12 sont quant à elles réalisées dans un ou plusieurs matériaux non-métalliques aptes à ne pas griffer la porte lorsque celle-ci entre en contact avec ces zones de contact. Il peut notamment s'agit de matière plastique, telle que du téflon ou de l'élastomère.

Parmi les zones de contact 4, 6, 8, 10 et 12 on compte les deux zones de contact inférieur 6 et 8 qui sont configurées pour recevoir un bord inférieur de la porte. Toutes les portes de véhicule automobile, indépendamment du modèle, présentent un bord inférieur généralement rectiligne. Ce bord est formé par l'assemblage de la doublure intérieure et de la paroi extérieure, par un pliage d'un bord inférieur de la paroi extérieure sur un bord inférieur de la doublure intérieure. Le bord inférieur de la porte réalisé par cette jonction forme une arête généralement rectiligne d'une épaisseur essentiellement constante d'un modèle de porte à l'autre. Les deux zones de contact inférieur 6 et 8 sont distantes l'une de l'autre, avantageusement d'au moins 300mm. Elles forment chacune une encoche apte à recevoir le bord inférieur de la porte. Cette encoche peut présenter un profil en V asymétrique, c'est-à-dire avec deux portions, de part et d'autre d'un plan médian passant par le sommet de l'angle du profil en V, qui sont différentes en ce qu'elles présentent des hauteurs différentes de manière à faciliter la mise en place de la porte, en particulier de son bord inférieur, tout en assurant un bon positionnement. A cet effet, la portion du profil en V située du côté du cadre 4 présente une hauteur supérieure à la portion opposée située du côté de chargement de la porte.

Parmi les zones de contact 4, 6, 8, 10 et 12 on compte également la zone de contact avant 10. Celle-ci est configurée pour entrer en contact avec une face frontale avant de la porte. Il s'agit d'une zone de contact essentiellement ponctuelle. Elle peut présenter une surface de contact inférieure à 2000mm² et/ou supérieure à 200mm². En particulier la zone de contact avant 10 peut s'étendre longitudinalement vers l'arrière, la direction longitudinale étant parallèle à une direction passant par les deux zones de contact inférieur 6 et 8, et correspondant à une direction principale de la porte en position sur le support.

Parmi les zones de contact 4, 6, 8, 10 et 12 on compte également la zone de contact latéral 12. Celle-ci est avantageusement linéique. Elle s'étend suivant une direction longitudinale ou formant un angle moyen inférieur à 20° avec la direction longitudinale. En référence à la description ci-avant de la zone de contact avant 10, la direction longitudinale est parallèle à une direction passant par les deux zones de contact inférieur 6 et 8. La zone de de contact latéral 12 n'est pas nécessairement rectiligne, elle peut effet présent un profil courbe apte à épouser la face latérale extérieure de la porte. La zone de contact latéral 12 est positionnée par rapport aux zones de contact inférieur 6 et 8 de manière à ce que la porte, une fois son bord inférieur engagé dans les zones de contact inférieur 6 et 8 et sa face extérieure en appui sur la zone de contact latéral 12, ait son centre de gravité situé du côté de la zone de contact latéral 12 par rapport à un plan vertical passant par les zones de contact inférieur 6 et 8, plus précisément là où le bord inférieur de la porte se positionne, de manière à ce que la porte soit en appui sur la zone de contact latéral 12 par l'effet de la gravité. Cela permet ainsi de déposer de manière stable une porte sur le support sans devoir actionner des moyens de retenue, fixation, serrage ou autre.

Aussi, les zones de contact inférieur 6 et 8 sont avantageusement positionnées de manière à ce que la direction longitudinale qu'elles définissent soit inclinée par rapport à une direction horizontale, avec la zone de contact inférieur arrière 6 plus haute que le zone de contact inférieur avant 8. Cette configuration a pour effet que la porte une fois posée sur ces zones de contact inférieur 6 et 8, et éventuellement contre la zone de contact latéral 12, va naturellement tendre à se déplacer vers l'avant par l'effet de la gravité jusqu'à ce que la face avant de la porte entre en appui contre la zone de contact avant 10. Il n'est pas nécessaire que la porte glisse d'elle-même jusqu'à contacter la zone de contact avant 10, ce mouvement pouvant être assisté d'un effort manuel d'un opérateur et/ou d'un effort exercé par un robot de transfert. Il est toutefois avantageux que ce mouvement s'opère sans l'exercice de forces extérieures autres que la force de gravité. L'utilisation de matériau avec faible coefficient de friction, comme le téflon, pour les zones de contact inférieur 6 et 8 ainsi que pour la zone de contact latéral 12 est alors intéressante. L'inclinaison de la direction longitudinale par rapport à l'horizontale est avantageusement comprise entre 10° et 40°, préférentiellement entre 15° et 35°, plus préférentiellement entre 20° et 30°.

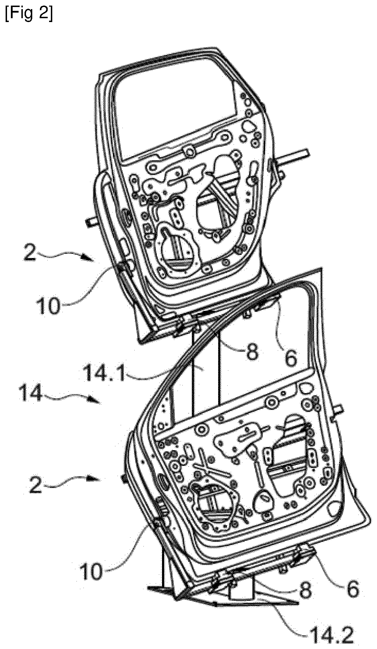

La figure 2 est une vue en perspective de deux supports selon la figure 1 montés sur un socle commun et supportant deux portes différentes.

Le socle commun 14 comprend essentiellement un montant 14.1 auquel sont fixés deux supports 2 tels qu'illustrés à la figure 1 et une semelle 14.2 située en bas du montant et destinée à être posée sur le sol ou toute autre surface notamment de convoyage. La figure 2 est intéressante en ce qu'elle montre bien que deux supports identiques suivant l'invention peuvent recevoir deux portes différentes, sans aménagement ou adaptation particulière. On observe bien le bord inférieur des portes engagé dans les zones de contact inférieur respectives 6 et 8. On observe également que les faces avant sur les doublures intérieures de portes sont en appui sur les zones de contact avant 10 respectives. Cet appui est avantageusement situé entre les zones de fixation des charnières supérieure et inférieure.

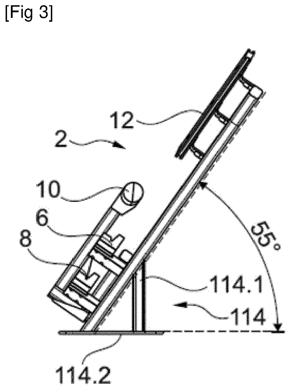

La figure 3 est une vue de profil d'un support similaire à celui des figures 1 et 2, pourvu d'un socle quelque peu différent. Le socle 114 comprend deux montants 114.1 et une semelle 114.2. Cette dernière est directement fixée au cadre 2. Les deux montants 114.1 forment deux jambes de renfort de la liaison directe entre la semelle 114.2 et le cadre 2.

A la figure 3, on peut observer l'inclinaison du cadre 2 par rapport à la verticale qui est de l'ordre de 35°. Cette inclinaison correspond au moins approximativement à l'inclinaison du plan passant par les zones de contact inférieur 6 et 8, et en contact avec la zone de contact latéral 12. Une telle inclinaison assure un positionnement stable de la porte. Cette inclinaison est avantageusement comprise entre 15° et 50°, préférentiellement entre 20° et 45°, plus préférentiellement entre 25° et 40°.

Toujours à la figure 3, on observe également que la zone de contact inférieur arrière 6 est à une hauteur plus grande que la zone de contact inférieur avant 8, de manière à faire tendre la porte à glisser par gravité vers l'avant jusqu'à appui sur la zone de contact avant 10.

Encore à la figure 3, on peut observer le profil en V asymétrique des encoches des zones de contact inférieur 6 et 8, tel que décrit précédemment en relation avec la figure 1.

Le support pour la manutention de porte de véhicule, selon l'invention et qui vient d'être décrit ci-avant peut être utilisé pour le stockage temporaire de portes ainsi que pour leur transport. Plus spécifiquement, plusieurs supports pour la manutention de porte de véhicule peuvent être disposés sur un tapis à bande en vue d'alimenter un poste de chargement, notamment du type bras robotisé, des portes sur la caisse de véhicule automobile. Les portes peuvent aussi être chargées sur les supports par un poste de déchargement, également notamment du type bras robotisé.

Lors du déchargement, les portes sont déposées chacune sur un support, en déposant le bord inférieur sur les zones de contact inférieur, ensuite en laissant glisser le bord en question jusqu'à ce que la porte contacte la zone de contact avant, et ensuite en basculant la porte autour du bord inférieur en question jusqu'à ce que la face latérale extérieure de la porte contacte la zone de contact latéral. Une fois chargée, une porte peut alors être transportée. Par transport on entend un déplacement au sein d'un bâtiment ou d'un site d'assemblage, ou encore un déplacement plus faible au sein d'un poste de chargement et/ou déchargement, par exemple sur un tapis à bande. Le déchargement s'opère à l'inverse du chargement, à savoir un décollement de la zone de contact latéral, suivi d'un déplacement le long des zones de contact inférieur, puis une sortie du bord inférieur des rainures des zones de contact inférieur.

## Revendications

1. Support (2) pour manutention de porte de véhicule automobile, comprenant :
- un cadre (4) ;
- des zones de contact avec la porte, fixées au cadre (4) ;
les zones de contact avec la porte comprenant :
- deux zones de contact inférieur (6, 8) formant, chacune, une encoche apte à recevoir un bord inférieur de la porte ;
- une zone de contact avant (10) avec une face frontale avant de la porte ; et
- une zone de contact latéral (12) avec une face latérale de la porte, **caractérisé en ce qu'**en position normale de travail dudit support (2), les deux zones de contact inférieur (6, 8) forment une direction longitudinale du bord inférieur de la porte, qui est inclinée d'au moins 10° par rapport à l'horizontale de manière à ce que la porte tende par gravité à venir en appui avec la zone de contact avant (10).

2. Support (2) selon la revendication 1, **caractérisé en ce que** la zone de contact avant (10) est formée par une face frontale d'un élément s'étendant vers l'arrière depuis le cadre (4).

3. Support (2) selon l'une des revendications 1 et 2, **caractérisé en ce que** les deux zones de contact inférieur (6, 8) sont distantes l'une de l'autre d'au moins 300mm.

4. Support (2) selon l'une des revendications 1 à 3, **caractérisé en ce que** chacune des deux zones de contact inférieur (6, 8) présente un profil en V.

5. Support (2) selon la revendication 4, **caractérisé en ce que** le profil en V d'au moins une des deux zones de contact inférieur (6, 8) est asymétrique en présentant une première portion située du côté de la zone de contact latéral (12) et une deuxième portion opposée à la première portion et moins haute que ladite première portion.

6. Support (2) selon l'une des revendications 1 à 5, **caractérisé en ce que** la zone de contact latéral (12) est du type linéique s'étendant longitudinalement.

7. Support (2) selon l'une des revendications 1 à 6, **caractérisé en ce qu'**en position normale de travail dudit support (2), la zone de contact latéral (12) forme avec les deux zones de contact inférieur (6, 8) un plan d'appui incliné d'au moins 15° par rapport à un plan vertical passant par lesdites deux zones de contact inférieur (6, 8).

8. Support (2) selon l'une des revendications 1 à 7, **caractérisé en ce que** ledit support (2) comprend, en outre :
- un socle (14 ; 114) rigidement fixé au cadre (4) et présentant une surface inférieure d'appui plane.

9. Procédé de manutention d'au moins une porte de véhicule automobile comprenant les étapes suivantes :
(a) chargement de l'au moins une porte sur un support (2) ;
(b) déplacement du support (2) ;
(c) déchargement de l'au moins une porte du support (2) ;
**caractérisé en ce que** le support (2) est selon l'une des revendications 1 à 8, à l'étape (b) l'au moins une porte étant maintenue en position en appui sur les zones de contact (6, 8, 10, 12) par l'effet de la pesanteur uniquement.

## Patentansprüche

1. Halter (2) für die Handhabung von Kraftfahrzeugtüren, bestehend aus:
- einen Rahmen (4);
- am Rahmen (4) befestigte Türkontaktbereiche; Türkontaktbereiche, die Folgendes umfassen:
- zwei untere Kontaktbereiche (6, 8), die jeweils eine Kerbe bilden, die zur Aufnahme einer unteren Türkante geeignet ist;
- eine vordere Kontaktstelle (10) mit einer vorderen Stirnseite der Tür; und
- einen seitlichen Kontaktbereich (12) mit einer Seitenfläche der Tür, **dadurch gekennzeichnet, dass** in der normalen Arbeitsposition des Trägers (2) die beiden unteren Kontaktbereiche (6, 8) eine Längsrichtung der unteren Kante der Tür bilden, die um mindestens 10° zur Horizontalen geneigt ist, sodass die Tür durch Schwerkraft zur Anlage mit dem vorderen Kontaktbereich (10) neigt.

2. Halterung (2) nach Anspruch 1, **dadurch gekennzeichnet, dass** der vordere Kontaktbereich (10) durch eine Stirnfläche eines vom Rahmen (4) nach hinten verlaufenden Elements gebildet ist.

3. Halter (2) nach einem der Ansprüche 1 und 2, **dadurch gekennzeichnet, dass** die beiden unteren Kontaktbereiche (6, 8) mindestens 300 mm voneinander beabstandet sind.

4. Halter (2) nach einem der Ansprüche 1 bis 3, **dadurch gekennzeichnet, dass** jeder der beiden unteren Kontaktbereiche (6, 8) ein V-Profil aufweist.

5. Halter (2) nach Anspruch 4, **dadurch gekennzeichnet, dass** das V-förmige Profil wenigstens einer der beiden unteren Kontaktzonen (6, 8) asymmetrisch ist, indem es einen ersten Abschnitt aufweist, der sich auf der Seite der seitlichen Kontaktzone (12) befindet, und einen zweiten Abschnitt, der dem ersten Abschnitt gegenüberliegt und weniger hoch als der erste Abschnitt ist.

6. Halter (2) nach einem der Ansprüche 1 bis 5, **dadurch gekennzeichnet, dass** die seitliche Kontaktzone (12) vom linearen Typ ist, der sich in Längsrichtung erstreckt.

7. Träger (2) nach einem der Ansprüche 1 bis 6, **dadurch gekennzeichnet, dass** in der normalen Arbeitsstellung des Trägers (2) die seitliche Kontaktzone (12) mit den beiden unteren Kontaktzonen (6, 8) eine Auflageebene bildet, die um mindestens 15° gegenüber einer vertikalen Ebene geneigt ist, die durch die beiden unteren Kontaktzonen (6, 8) verläuft.

8. Träger (2) nach einem der Ansprüche 1 bis 7, **dadurch gekennzeichnet, dass** der Träger (2) ferner umfasst:
- einen am Rahmen (4) starr befestigten Sockel (14; 114) mit ebener Unterlagefläche.

9. Verfahren zum Handhaben mindestens einer Kraftfahrzeugtür mit folgenden Schritten:
(a) Laden der mindestens einen Tür auf einen Träger (2);
(b) Verlagerung des Trägers (2);
(c) Entladen mindestens einer Tür von der Halterung (2);
**dadurch gekennzeichnet, dass** der Träger (2) nach einem der Ansprüche 1 bis 8 ist, wobei in Schritt (b) die mindestens eine Tür allein durch die Wirkung der Schwerkraft in der Auflage auf die Kontaktbereiche (6, 8, 10, 12) gehalten wird.

## Claims

1. Support (2) for handling motor vehicle doors, comprising:
- a frame (4);
- areas of contact with the door, fixed to the frame (4);
contact areas with the door comprising:
two lower contact zones (6, 8) each forming a notch adapted to receive a lower edge of the door;
- a front contact area (10) with a front face of the door; and
- a lateral contact zone (12) with a lateral face of the door, **characterized in that**, in the normal working position of said support (2), the two lower contact zones (6, 8) form a longitudinal direction of the lower edge of the door, which is inclined by at least 10° with respect to the horizontal so that the door tends by gravity to come into abutment with the front contact zone (10).

2. Support (2) according to Claim 1, **characterized in that** the front contact zone (10) is formed by a front face of an element extending rearwards from the frame (4).

3. Support (2) according to one of Claims 1 and 2, **characterized in that** the two lower contact zones (6, 8) are at least 300 mm apart.

4. Support (2) according to one of Claims 1 to 3, **characterized in that** each of the two lower contact zones (6, 8) has a V-shaped profile.

5. Support (2) according to Claim 4, **characterized in that** the V-shaped profile of at least one of the two lower contact zones (6, 8) is asymmetrical by having a first portion located on the side of the lateral contact zone (12) and a second portion opposite the first portion and lower than the said first portion.

6. Support (2) according to one of Claims 1 to 5, **characterized in that** the lateral contact zone (12) is of the linear type extending longitudinally.

7. Support (2) according to one of Claims 1 to 6, **characterized in that**, in the normal working position of the said support (2), the lateral contact zone (12) forms with the two lower contact zones (6, 8) a bearing plane inclined by at least 15° with respect to a vertical plane passing through the said two lower contact zones (6, 8).

8. Support (2) according to one of Claims 1 to 7, **characterized in that** the said support (2) further comprises:
- a base (14; 114) rigidly fixed to the frame (4) and having a flat lower bearing surface.

9. Method for handling at least one motor vehicle door comprising the following steps:
(a) loading of the at least one door on a support (2);
(b) movement of the support (2);
(c) unloading of the at least one door of the support (2);
**characterized in that** the support (2) is according to one of claims 1 to 8, in step (b) the at least one door being held in position bearing on the contact zones (6, 8, 10, 12) solely by the effect of gravity.
